# EUROPÄISCHE PATENTSCHRIFT

(11) **EP 2 214 176 B1**
(45) Veröffentlichungstag und Bekanntmachung des Hinweises auf die Patenterteilung: **26.10.2011**
(21) Anmeldenummer: 09176023.1
(22) Anmeldetag: 16.11.2009
(51) Int. Cl.: H01B 3/42, F16L 11/12, H01B 3/30, H01B 3/44, F16L 53/00

(54) **Beheizbarer Artikel, insbesondere ein beheizbarer Schlauch, mit einem kunststoffummantelten Heizleiter und Verfahren zu dessen Herstellung**
Heatable item, in particular a heatable hose, with a plastic clad heat conductor and method for producing same
Article pouvant être chauffé, notamment un tuyau pouvant être chauffé, doté d'un conducteur thermique revêtu de plastique et son procédé de fabrication

(30) Priorität: 28.01.2009 DE 102009003394
(43) Veröffentlichungstag der Anmeldung: 04.08.2010
(73) Patentinhaber: ContiTech Schlauch GmbH, 30165 Hannover (DE)
(72) Erfinder: Lange, Rainer, 35110, Frankenau (DE); Tasseki, Metin, 34497, Korbach (DE); Jungrichter, Frank, 34497, Korbach (DE)
(74) Vertreter: Finger, Karsten

(56) Entgegenhaltungen:
- EP-A2- 1 329 660
- US-A1- 2004 030 012

## Beschreibung

Die Erfindung betrifft einen beheizbaren Artikel mit einem elastischen Grundkörper aus einem Vulkanisat, wobei in den Grundkörper ein Heizleiter eingebettet ist, der mit einer elektrischen Anschlussvorrichtung elektrisch verbindbar ist sowie eine Seele als Heizdraht und eine Ummantelung aus einem elektrisch isolierenden polymeren Werkstoff umfasst. In den Artikel ist zumeist noch ein Festigkeitsträger, der ein- oder mehrlagig ausgebildet sein kann, eingebettet. Die Erfindung betrifft ferner ein Verfahren zur Herstellung eines derartigen beheizbaren Artikels.

Ein Artikel der oben genannten Art kommt insbesondere in Form eines beheizbaren Schlauches zur Anwendung. Zur Erwärmung eines im Schlauch fließenden Mediums ist dieser mit einem Heizleiter versehen, der sich über zumindest einen Teilbereich der Schlauchlänge erstreckt, und zwar insbesondere in Form eines wendelförmigen Verlaufes. Der Heizleiter umfasst eine metallische Seele und eine Ummantelung als Isolierschicht. Der Heizleiter ist dabei innerhalb der Außenschicht des Schlauches eingebettet, insbesondere unmittelbar oberhalb der geflechtsartigen Verstärkungsschicht. Wichtig ist, dass der Heizleiter im Bereich der elektrischen Anschlussvorrichtung ohne Schädigung seiner metallischen Seele und seiner Ummantelung freigelegt werden kann. Hinsichtlich technischer Details eines beheizbaren Schlauches wird insbesondere auf folgende

Patentliteratur verwiesen:
DE 197 54 163 A1
DE 199 15 228 A1
EP 1 329 660 B1
US 4 553 023

Für die Ummantelung des Heizleiters werden Kunststoffe eingesetzt, die elektrisch isolierende Eigenschaften aufweisen sowie unter Vulkanisationsbedingungen (130 bis 200 °C) beständig sind. Problempunkt ist bislang die Tatsache, dass die Dicke der Isolationsschicht beim Vulkanisationsprozess des Artikelrohlings durch Wärme und/oder Druck, insbesondere im Kontaktbereich von Isolation und der geflechtsartigen Verstärkungsschicht, örtlich stark reduziert oder auch zerstört wird. Es entstehen "Geflechtsabdrücke" in der Isolationsschicht. Insbesondere an diesen Stellen reißt die Isolation beim Herausziehen des Heizleiters aus der Vulkanisatschicht auf. Folge wiederum ist, dass häufig ein nicht unerheblicher Anteil des Artikels, insbesondere bei Schläuchen, dem Abfall zugeführt werden mussten. Im Hintergrund der oben genannten Problematik besteht die Aufgabe der Erfindung darin, für die Ummantelung des Heizleiters einen polymeren Werkstoff mit isolierenden Eigenschaften bereitzustellen, der zusätzlich wärmedruckbeständig ist, verbunden mit einer deutlichen Reduzierung der Abfallrate.

Gelöst wird diese Aufgabe dadurch, dass die Ummantelung ein polymerer Werkstoff auf der Basis eines Polyphenylens oder eines Polyphenylenderivates ist, wobei der polymere Werkstoff getempert ist.

Polyphenylene und deren Abkömmlinge (Derivate) sind Hochleistungskunststoffe, wobei insbesondere folgende Typen zu nennen sind:
Polyphenylene
Polyphenylenacetylene
Polyphenylenbenzoxazole
Polyphenylenbenzthizole
Polyphenylenchinoxaline
Polyphenylenether
Polyphenylenoxide (PPO)
Polyphenylensulfide (PPS)
Polphenylensulfone
Polyphenylenvinylene

Hinsichtlich chemischer Details der Polyphenylene und deren Derivate wird auf Römpps Chemie-Lexikon, Band 5, 8. Auflage, 1987, verwiesen.

Der polymere Werkstoff der Ummantelung ist insbesondere ein Polyphenylen, ein PPO, ein PPS oder ein Polyphenylenether. Von besonderer Bedeutung wiederum ist ein PPS.

Der Anteil des Polyphenylens oder des Polyphenylenderivates innerhalb der Ummantelung beträgt mindestens 50 Gew.-%, insbesondere wenigstens 70 Gew.-%. Der Anteil kann 100 Gew.-% sein, beispielsweise ausschließlich aus einem PPS. Zumeist kommen Polymerblends zum Einsatz, beispielsweise in Form eines Polymerblends aus einem PPS und einem thermoplastischen Elastomer (TPE) oder einem PPS mit einem Polyamid (z.B. PA6.6). Mit derartigen Polymerblends kann man einerseits die Haftfestigkeit zu dem umgebenden elastischen Grundkörper erhöhen wie auch ein leichtes Freilegen des Heizleiters mittels einer Trennfuge im Bereich der elektrischen Anschlussvorrichtung erreichen.

Die Hochleistungskunststoffe der oben genannten Art tragen zu einer erhöhten Festigkeit bei. Um die eingangs erwähnte Aufgabenstellung vollständig lösen zu können, ist es erforderlich, dass diese Hochleistungskunststoffe zusätzlich getempert sind. Hinsichtlich Details des Temperprozesses wird im folgenden verfahrenstechnischen Kapitel noch näher eingegangen.

Eine weitere Aufgabe der Erfindung besteht darin, ein Verfahren zur Herstellung eines beheizbaren Artikels bereitzustellen, bei dem die Ummantelung des Heizleiters wärmedruckbeständig ist, verbunden mit einer deutlichen Reduzierung der Abfallrate.

Gelöst wird diese Aufgabe durch wenigstens folgende Verfahrensschritte:
- die Ummantelung des Heizleiters, die ein polymerer Werkstoff auf der Basis eines Polyphenylens oder eines Polyphenylenderivates ist, wird getempert;
- der getemperte Heizleiter wird in eine den Grundkörper bildende vulkanisierbare Polymermischung eingebettet, und zwar unter Ausbildung eines Artikelrohlings;
- schließlich wird der Artikelrohling vulkanisiert.

Da der Temperprozess des kunststoffummantelten Heizleiters von wesentlicher Bedeutung ist, wird zunächst eine Definition des Tempern gegeben.

Unter Tempern versteht man die Wärmebehandlung eines Werksstoffes, um gezielte Eigenschaften zu erhalten. Bei Kunststoffen geschieht dies durch Warmlagern, um bessere Wärmebeständigkeit zu erzielen, innere Spannungen abzubauen und eine Nachschwindung vorwegzunehmen. Die Wärmebehandlung erfolgt materialabhängig bei Temperaturen unterhalb des Erweichungsbereiches bzw. kristallinen Schmelzbereiches. Während der Wärmelagerungsdauer ist auf eine möglichst konstante Temperatur und eine gute Luftzirkulation innerhalb des Umluftofens zu achten. Um einen Wärmestau zu vermeiden, sollten ferner die Teile nicht aufeinander gestapelt werden.

Die Heizleiter, umfassend eine Seele als Heizdraht und eine Ummantelung aus einem elektrisch isolierenden polymeren Werkstoff, werden auf Spulen vom Hersteller derartiger Heizleiter auf Spulen angeliefert und vor Einbau in den beheizbaren Artikel einem Temperprozess im Trockenofen unterworfen. Die Behandlungstemperatur und Behandlungszeit sind auf das zu tempernde Polymer abzustimmen. Bei Einsatz eines Polyphenylens oder eines Polyphenylenderivates als Ummantelung, insbesondere in Form eines PPS, hat sich herausgestellt, dass bei einer Temperung bei 130 bis 170 °C, insbesondere bei 140 bis 160 °C, insbesondere wiederum bei 150 °C, das beste Ergebnis erzielt wird. Die Dauer der Temperung beträgt mindestens 1 Stunde. Zumeist beträgt die Temperdauer abhängig von der gesamten Masse bzw. Anzahl der Abwicklungen auf der Anlieferspule vier bis fünfzehn Stunden. Nach dem Temperprozess ist es vorteilhaft, wenn vor der Weiterverarbeitung der getemperte Heizleiter langsam auf Raumtemperatur abgekühlt wird.

Der getemperte Heizleiter wird nun in eine den Grundkörper bildende vulkanisierbare Polymermischung eingebettet, verbunden mit einer anschließenden Vulkanisation des Artikelrohlings.

Als Polymermischung wird zumeist eine vulkanisierbare Kautschukmischung eingesetzt, die eine unverschnittene Kautschukkomponente oder einen Kautschukkomponentenverschnitt und übliche Mischungsingredienzien umfasst. Als Kautschukkomponenten sind insbesondere zu nennen:
Ethylen-Propylen-Mischpolymerisat (EPM)
Ethylen-Propylen-Dien-Mischpolymerisat (EPDM)
Nitrilkautschuk (NBR)
(teil)hydrierter Nitrilkautschuk (HNBR)
Fluor-Kautschuk (FKM)
Chloropren-Kautschuk (CR)
Naturkautschuk (NR)
Styrol-Butadien-Kautschuk (SBR)
Isopren-Kautschuk (IR)
Butylkautschuk (IIR)
Brombutylkautschuk (BIIR)
Chlorbutylkautschuk (CIIR)
Butadien-Kautschuk (BR)
Chloriertes Polyethylen (CM)
Chlorsulfoniertes Polyethylen (CSM)
Polyepichlorhydrin (ECO)
Ethylen-Vinylacetat-Kautschuk (EVA)
Acrylat-Kautschuk (ACM)
Ethylen-Acrylat-Kautschuk (AEM)
Siliconkautschuk (MQ, VMQ, PVMQ, FVMQ; DE 10 2006 058 470 A1)
Fluorierter Methylsiliconkautschuk (MFQ)
Perfluorinierter Propylen-Kautschuk (FFPM)
Perfluorcarbon-Kautschuk (FFKM)
Polyurethan (PU)

Auch der Einsatz eines Verschnittes, insbesondere in Verbindung mit einem der vorgenannten Kautschuktypen, beispielsweise ein NR/BR-Verschnitt, ist möglich.

Von besonderer Bedeutung sind: EPM, EPDM, HNBR, CR, NR, ACM, AEM oder FKM, die insbesondere jeweils unverschnitten zur Anwendung gelangen.

Die üblichen Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe (z.B. Farbpigmente). Diesbezüglich wird auf den allgemeinen Stand der Kautschukmischungstechnologie verwiesen.

Auch eine Polymermischung, die nach der Vulkanisation ein thermoplastisches Vulkanisat (TPE) bildet, kann eingesetzt werden. Hinsichtlich der diesbezüglichen Werkstofftechnologie wird beispielsweise auf die Offenlegungsschrift DE 100 04 632 A1 verwiesen.

Zumeist wird in den elastischen Grundkörper, insbesondere bei Schläuchen, ein Festigkeitsträger, der ein- oder mehrlagig ausgebildet sein kann, eingebettet. Bei Schläuchen wird der wendelförmig verlaufende Heizleiter oberhalb des Festigkeitsträgers in die Außenschicht eingebaut.

Die Erfindung wird nun anhand von Ausführungsbeispielen unter Bezugnahme auf schematische Zeichnungen erläutert. Es zeigen:
- Fig. 1: den Querschnitt eines Heizleiters, umfassend eine Seele und eine Ummantelung;
- Fig. 2: einen Schlauch mit einem eingebetteten textilen Festigkeitsträger in Kreuzlagenanordnung;
- Fig. 3: einen Schlauch mit einem eingebetteten wie auch durch die Außenschicht herausgezogenen Heizleiter.

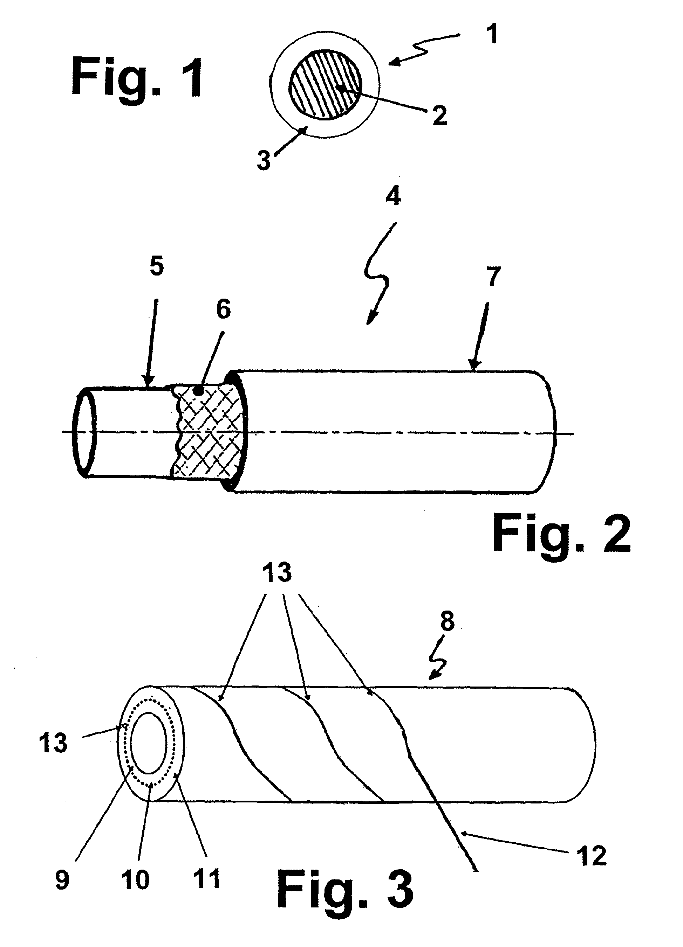

Nach Fig. 1 umfasst der Heizleiter 1 eine Seele 2 aus Metall als Heizdraht und eine Ummantelung 3 als Isolierschicht, insbesondere auf der Basis eines PPS, wobei die Ummantelung einer Temperung unterzogen wird. Der getemperte Heizleiter wird dann in den Schlauch eingebaut.

Nach Fig. 2 besteht der Schlauch 4 aus einer Innenschicht 5 und Außenschicht 7 aus einer vulkanisierten Kautschukmischung, beispielsweise auf der Basis von EPDM. Zwischen der Innenschicht und der Außenschicht ist ein textiler Festigkeitsträger 6 eingebettet. Dieser Festigkeitsträger ist beispielsweise aus Zwirnfäden gebildet, und zwar bei einer Kreuzlagenanordnung. Es liegt hier somit eine geflechtsartige Verstärkungsschicht vor. Innerhalb der Außenschicht 7 und unmittelbar oberhalb des Festigkeitsträgers 6 ist nun der getemperte Heizleiter (Fig. 1) eingebaut, was in Verbindung mit Fig. 3 nun näher erläutert wird.

Nach Fig. 3 umfasst der beheizbare Schlauch 8 eine Innenschicht 9, einen eingebetteten Festigkeitsträger 10 und eine Außenschicht 11. In die Außenschicht ist der getemperte Heizleiter 12 wendelförmig eingebaut, der mittels der Trennfuge 13 freigelegt werden kann, und zwar für die elektrische Verbindung mit der elektrischen Anschlussvorrichtung. Hinsichtlich weiterer Details wird auf die Patentschrift EP 1 329 660 B1 verwiesen.

Der getemperte Heizleiter mit einer Ummantelung auf der Basis eines Polyphenylens oder eines Polyphenylenderivates erfüllt die eingangs dargelegte Aufgabenstellung. Darüber hinaus wird durch das Tempern der Heizleiter steifer, die Wickelspannung nimmt zu.

Der beheizbare Schlauch findet insbesondere als Chemikalienschlauch oder als Druckschlauch für Kraftfahrzeuge, insbesondere wiederum im LKW-Bereich, Anwendung.

### Bezugszeichenliste

### (Teil der Beschreibung)

- 1: Heizleiter
- 2: Seele des Heizleiters
- 3: Ummantelung des Heizleiters
- 4: Schlauch
- 5: Innenschicht
- 6: Festigkeitsträger
- 7: Außenschicht
- 8: Schlauch
- 9: Innenschicht
- 10: Festigkeitsträger
- 11: Außenschicht
- 12: Heizleiter
- 13: Trennfuge

## Patentansprüche

1. Beheizbarer Artikel mit einem elastischen Grundkörper aus einem Vulkanisat, wobei in den Grundkörper ein Heizleiter (1, 12) eingebettet ist, der mit einer elektrischen Anschlussvorrichtung elektrisch verbindbar ist sowie eine Seele (2) als Heizdraht und eine Ummantelung (3) aus einem elektrisch isolierenden polymeren Werkstoff umfasst, **dadurch gekennzeichnet, dass** die Ummantelung (3) ein polymerer Werkstoff auf der Basis eines Polyphenylens oder eines Polyphenylenderivates ist, wobei der polymere Werkstoff getempert ist.

2. Beheizbarer Artikel nach Anspruch 1, **dadurch gekennzeichnet, dass** der polymere Werkstoff der Ummantelung (3) ein Polyphenylen, ein Polyphenylenoxid (PPO), ein Polyphenylensulfid (PPS) oder ein Polyphenylenether ist.

3. Beheizbarer Artikel nach Anspruch 1 oder 2, **dadurch gekennzeichnet, dass** der Anteil des Polyphenylens oder des Polyphenylenderivates innerhalb der Ummantelung (3) mindestens 50 Gew.-% beträgt.

4. Beheizbarer Artikel nach einem der Ansprüche 1 bis 3, **dadurch gekennzeichnet, dass** der polymere Werkstoff der Ummantelung (3) bei 130 bis 170 °C getempert ist.

5. Beheizbarer Artikel nach einem der Ansprüche 1 bis 4, **dadurch gekennzeichnet, dass** der Artikel ein Schlauch (4, 8) ist.

6. Beheizbarer Artikel nach Anspruch 5, **dadurch gekennzeichnet, dass** der Artikel ein Chemikalienschlauch oder ein Druckschlauch für Kraftfahrzeuge ist.

7. Verfahren zur Herstellung eines beheizbaren Artikels mit einem elastischen Grundkörper aus einem Vulkanisat, wobei in den Grundkörper ein Heizleiter (1, 12) eingebettet ist, der mit einer elektrischen Anschlussvorrichtung elektrisch verbindbar ist sowie eine Seele (2) als Heizdraht und eine Ummantelung (3) aus einem elektrisch isolierenden polymeren Werkstoff umfasst, **gekennzeichnet durch** wenigstens folgende Verfahrensschritte:
- die Ummantelung (3) des Heizleiters (1, 12), die ein polymerer Werkstoff auf der Basis eines Polyphenylens oder eines Polyphenylenderivates ist, wird getempert;
- der getemperte Heizleiter (1, 12) wird in eine den Grundkörper bildende vulkanisierbare Polymermischung eingebettet, und zwar unter Ausbildung eines Artikelrohlings;
- schließlich wird der Artikelrohling vulkanisiert.

8. Verfahren nach Anspruch 7, **dadurch gekennzeichnet, dass** als polymerer Werkstoff der Ummantelung (3) ein Polyphenylen, ein Polyphenylenoxid (PPO), ein Polyphenylensulfid (PPS) oder ein Polyphenylenether eingesetzt wird.

9. Verfahren nach Anspruch 7 oder 8, **dadurch gekennzeichnet, dass** als polymerer Werkstoff der Ummantelung (3) ein Polyphenylen oder ein Polyphenylenderivat eingesetzt wird, dessen Anteil innerhalb der Ummantelung wenigstens 50 Gew.-% beträgt.

10. Verfahren nach einem der Ansprüche 7 bis 9, **dadurch gekennzeichnet, dass** die Temperung der Ummantelung (3) bei 130 bis 170 °C durchgeführt wird.

11. Verfahren nach einem der Ansprüche 7 bis 10, **dadurch gekennzeichnet, dass** die Temperung der Ummantelung (3) wenigstens eine Stunde lang durchgeführt wird.

12. Verfahren nach einem der Ansprüche 7 bis 11, **dadurch gekennzeichnet, dass** der Heizleiter (1) nach der Temperung der Ummantelung (3) vor der Weiterverarbeitung langsam auf Raumtemperatur abgekühlt wird.

## Claims

1. Heatable article having an elastic base body made of a vulcanisate, wherein a heating conductor (1, 12) is embedded in the base body, can be electrically connected to an electrical connection device and also comprises a core (2) as a heating wire and a sleeve (3) made of an electrically insulating polymer material, **characterized in that** the sleeve (3) is a polymer material based on a polyphenylene or a polyphenylene derivative, the polymer material being annealed.

2. Heatable article according to Claim 1, **characterized in that** the polymer material of the sleeve (3) is a polyphenylene, a polyphenylene oxide (PPO), a polyphenylene sulphide (PPS) or a polyphenylene ether.

3. Heatable article according to Claim 1 or 2, **characterized in that** the proportion of the polyphenylene or of the polyphenylene derivative within the sleeve (3) is at least 50% by weight.

4. Heatable article according to one of Claims 1 to 3, **characterized in that** the polymer material of the sleeve (3) is annealed at 130 to 170°C.

5. Heatable article according to one of Claims 1 to 4, **characterized in that** the article is a hose (4, 8).

6. Heatable article according to Claim 5, **characterized in that** the article is a hose for chemicals or a pressure hose for motor vehicles.

7. Method for producing a heatable article having an elastic base body made of a vulcanisate, wherein a heating conductor (1, 12) is embedded in the base body, can be electrically connected to an electrical connection device and also comprises a core (2) as a heating wire and a sleeve (3) made of an electrically insulating polymer material, **characterized by** at least the following method steps:
- the sleeve (3) of the heating conductor (1, 12), which sleeve is a polymer material based on a polyphenylene or a polyphenylene derivative, is annealed;
- the annealed heating conductor (1, 12) is embedded in a vulcanizable polymer mixture which forms the base body, to be precise to form an article blank;
- finally, the article blank is vulcanized.

8. Method according to Claim 7, **characterized in that** the polymer material used for the sleeve (3) is a polyphenylene, a polyphenylene oxide (PPO), a polyphenylene sulphide (PPS) or a polyphenylene ether.

9. Method according to Claim 7 or 8, **characterized in that** the polymer material used for the sleeve (3) is a polyphenylene or a polyphenylene derivative, the proportion of which within the sleeve is at least 50% by weight.

10. Method according to one of Claims 7 to 9, **characterized in that** the sleeve (3) is annealed at 130 to 170°C.

11. Method according to one of Claims 7 to 10, **characterized in that** the sleeve (3) is annealed for at least one hour.

12. Method according to one of Claims 7 to 11, **characterized in that**, before further processing, the heating conductor (1) is slowly cooled to room temperature after the sleeve (3) has been annealed.

## Revendications

1. Objet apte à être chauffé, doté d'un corps de base en matériau vulcanisé,
un conducteur de chaleur (1, 12) qui peut être raccordé à un dispositif de raccordement électrique et qui comprend une âme (2) servant de fil chauffant et une enveloppe (3) en un matériau polymère électriquement isolant étant incorporé dans le corps de base,
**caractérisé en ce que**
l'enveloppe (3) est en un matériau polymère à base de polyphénylène ou d'un dérivé de polyphénylène et
**en ce que** le matériau polymère a subi une trempe.

2. Objet apte à être chauffé selon la revendication 1, **caractérisé en ce que** le matériau polymère de l'enveloppe (3) est un polyphénylène, un poly(oxyde de phénylène) (PPO), un poly(sulfure de phénylène) (PPS) ou un poly(éther de phénylène).

3. Objet apte à être chauffé selon les revendications 1 ou 2, **caractérisé en ce que** la teneur en polyphénylène ou en dérivé de polyphénylène de l'enveloppe (3) est d'au moins 50 % en poids.

4. Objet apte à être chauffé selon l'une des revendications 1 à 3, **caractérisé en ce que** le matériau polymère de l'enveloppe (3) a subi une trempe entre 130 et 170°C.

5. Objet apte à être chauffé selon l'une des revendications 1 à 4, **caractérisé en ce que** l'objet est un tuyau flexible (4, 8).

6. Objet apte à être chauffé selon la revendication 5, **caractérisé en ce que** l'objet est un tuyau flexible pour produits chimiques ou un tuyau flexible pour véhicules automobiles.

7. Procédé de fabrication d'un objet apte à être chauffé, doté d'un corps de base en matériau vulcanisé,
un conducteur de chaleur (1, 12) qui peut être raccordé à un dispositif de raccordement électrique et qui comprend une âme (2) servant de fil chauffant et une enveloppe (3) en un matériau polymère électriquement isolant étant incorporé dans le corps de base,
**caractérisé par** au moins les étapes suivantes :
- l'enveloppe (3) du conducteur de chaleur (1, 12), qui est en un matériau polymère à base de polyphénylène ou d'un dérivé de polyphénylène, subit une trempe,
- en ce que le conducteur de chaleur (1, 12) qui a subi une trempe est incorporé dans un mélange de polymères vulcanisable qui forme le corps de base, pour former ainsi une ébauche de l'objet, et
- en ce que l'objet est ensuite vulcanisé.

8. Procédé selon la revendication 7, **caractérisé en ce qu'**il utilise un polyphénylène, un poly(oxyde de phénylène) (PPO), un poly(sulfure de phénylène) (PPS) ou un poly(éther de phénylène) comme matériau polymère de l'enveloppe (3).

9. Procédé selon les revendications 7 ou 8, **caractérisé en ce qu'**il utilise comme matériau polymère de l'enveloppe (3) un polyphénylène ou un dérivé de polyphénylène dont la teneur dans l'enveloppe (3) est d'au moins 50 % en poids.

10. Procédé selon l'une des revendications 7 à 9, **caractérisé en ce que** l'enveloppe (3) subit une trempe entre 130 et 170°C.

11. Procédé selon l'une des revendications 7 à 10, **caractérisé en ce que** l'enveloppe (3) subit une trempe d'au moins une heure.

12. Procédé selon l'une des revendications 7 à 11, **caractérisé en ce qu'**après la trempe de l'enveloppe (3) et avant la poursuite du traitement, le conducteur de chaleur (1) est refroidi lentement jusqu'à température ambiante.
